# EUROPÄISCHE PATENTSCHRIFT

(11) **EP 2 835 245 B1**
(45) Veröffentlichungstag und Bekanntmachung des Hinweises auf die Patenterteilung: **15.11.2017**
(21) Anmeldenummer: 14179627.6
(22) Anmeldetag: 04.08.2014
(51) Int. Cl.: F16L 33/34, F16L 25/00, F16L 33/30, F16L 47/20, B29C 45/16

(54) **Zweikomponenten Kondensatschlauch**
Two component condensate hose
Tuyau flexible de condensat à deux composants

(30) Priorität: 05.08.2013 AT 6232013
(43) Veröffentlichungstag der Anmeldung: 11.02.2015
(73) Patentinhaber: Vaillant GmbH, 42859 Remscheid (DE)
(72) Erfinder: Do, Van Nhiem, 42657 Solingen (DE); Migliorino, Giuseppe, 42855 Remscheid (DE); Löhr, Chrístoph, 42119 Wuppertal (DE); Gerhards, Andreas, 42897 Remscheid (DE); Godzik, Elisabeth, 42929 Wermelskirchen (DE)
(74) Vertreter: Hocker, Thomas

(56) Entgegenhaltungen:
- WO-A1-2006/007744
- DE-U1- 20 104 406
- FR-A1- 2 528 533
- FR-A1- 2 655 126
- US-A- 6 135 158
- US-A1- 2008 072 911

## Beschreibung

Die Erfindung betrifft eine Steckverbindung mit Anschlussstutzen und Leitung gemäß dem Oberbegriff des unabhängigen Patentanspruchs.

Beim Betrieb von Brennwertgeräten entsteht bei der Abkühlung von Wasserdampf Kondensat. Dieses wird unterhalb des Wärmetauschers aufgefangen und muss über eine Kondensatleitung abgeführt werden. Gleichzeitig muss ein Abgasaustritt aus der Kondensatleitung verhindert werden. Daher kommen Siphons zum Einsatz, in denen Kondensat den Abgasaustritt verhindert.

Gemäß dem Stand der Technik wird ein Siphon mit dem Wärmetauscher über ein Rohr verbunden, das mittels einer Überwurfmutter oder Schelle verschraubt wird. Die bekannten Vorrichtungen weisen Nachteile hinsichtlich der Vielzahl der eingesetzten Bauteile auf. Zu den hohen Materialkosten treten Arbeitskosten für den erhöhten Montageaufwand hinzu.

Aus der FR 2 528 533 ist einen Anschlussstutzen mit Leitung bekannt, bei dem beide Teile über ein spiralförmiges Gewinde verfügen, wodurch der Anschlussstutzen mit der Leitung verschraubt wird. Das Profil des Aufnahmestutzens steigt von der Öffnungsseite zum Inneren an, um dann auf einem bestimmten Höhenniveaus zu verbleiben und dann senkrecht abzufallen. Die Demontage erfolgt durch Schrauben.

FR 2 655 126 zeigt ein ringförmiges, alternierendes Profil, bei dem durch den gleichen Flankenanstieg auf beiden Seiten das Montieren und Demontieren gleiche Kräfte erfordert. Somit ist die Gefahr des Ablösens gegeben. Ein weiteres aus dieser Schrift bekanntes Profil kann nur zerstörend gelöst werden.

US 2008/0072911 A1 zeigt eine Tracheostoma-Kanüle mit einem ringförmige angespritzen Flansch. Aus US 6135158 A ist ein thermoplastischer Wellschlauch mit einer angespritzen Muffe bekannt. WO 2006/007744 A1 offenbart einen Wellschlauch mit im Zweikomponenten-Spritzguß verbundenen Teilen.

DE 201 04 406 U1 zeigt ein ringförmiges, alternierendes Profil. Das Profil des Aufnahmestutzens steigt von der Öffnungsseite zum Inneren an, um dann auf einem bestimmten Höhenniveaus zu verbleiben und dann senkrecht abzufallen. Somit kann die Verbindung nur mittels Zerstörung gelöst werden. Als besonderen Vorteil der dort dargestellten Erfindung wird angesehen, dass die Muffe mit der Leitung aus einem einzigen Kunststoffmaterial hergestellt ist.

Aufgabe der vorliegenden Erfindung ist es, eine Steckverbindung zu schaffen, die kostengünstig ist und sich durch eine einfache Bauweise auszeichnet.

Erfindungsgemäß wird obige Aufgabe durch die Merkmale des kennzeichnenden Teils des Anspruchs 1 gelöst. Bei einer Steckverbindung mit einem Anschlussstutzen und einer Leitung wird hierbei die aus einem Thermoplast hergestellte Leitung mittels einer im Zweikomponenten-Spritzgußverfahren angespritzte Muffe aus einem thermoplastischen Elastomer formschlüssig mit dem Anschlussstutzen verbunden. Die Muffe verfügt über ein mit dem im Wesentlichen ringförmiges, alternierendes Außenprofil des Anschlussstutzens korrespondierendes wesentlichen ringförmiges, alternierendes Innenprofil.

Weitere vorteilhafte Ausgestaltungen ergeben sich aus den Unteransprüchen.

Gemäß den Merkmalen des Anspruches 2 handelt es sich bei dem Thermoplast der Leitung um Polypropylen.

Die Muffe besteht gemäß den Merkmalen des Anspruches 3 aus einem thermoplastische Elastomer auf Olefinbasis.

Gemäß den Merkmalen des Anspruches 4 überlappen sich die Muffe sowie die Leitung in axialer Erstreckungsrichtung der Leitung in einem Übergangsbereich.

Gemäß Anspruch 5 ist die Passung zwischen der Muffe sowie dem Anschlussstutzen eine Presspassung, welche durch die Elastizität der Muffe eine formschlüssige Verbindung schafft.

Die Erfindung wird anhand der Figuren detailliert erläutert.

Die Zeichnungen zeigen:
Fig. 1 einen Anschlussstutzen,
Fig. 2 eine Leitung mit erfindungsgemäßer Muffe sowie
Fig. 3 die Verbindung des Anschlussstutzens mit der Leitung über die Muffe.

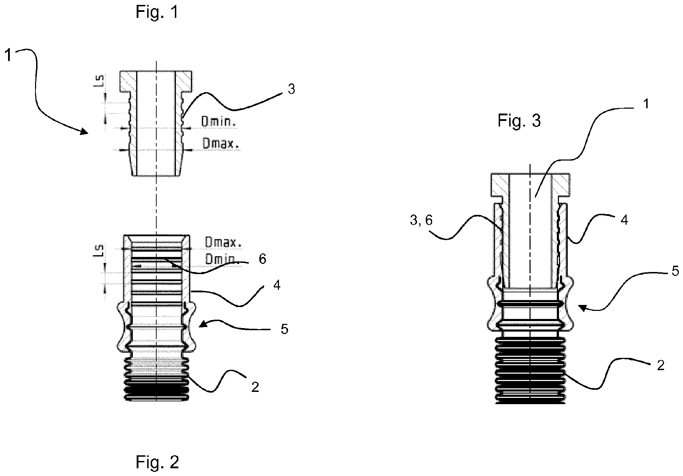

Figur 1 zeigt einen Anschlussstutzen 1 mit einem wesentlichen ringförmigen, alternierenden Außenprofil 3. Derartige Anschlussstutzen, die vorzugsweise aus Polypropylen oder einen anderen festen Werkstoff hergestellt werden, entsprechen dem Stand der Technik. Der Anschlussstutzen 1 verjüngt sich an einem Ende, so dass eine korrespondierende Leitung, deren Innendurchmesser einen größeren Durchmesser aufweist als das Ende des Anschlussstutzens 1, aufgeschoben werden kann. Zugleich muss der maximale

Durchmesser des alternierenden Außenprofils 3 des Anschlussstutzens größer sein als der Innendurchmesser einer korrespondierenden Leitung. Wird als Leitung ein Wellschlauch aufgeschoben, so muss für einen sicheren Sitz der maximale Durchmesser des Außenprofils 3 des Anschlussstutzens 1 größer sein als der maximale Innendurchmesser des Innenprofils des Wellrohrs. Zugleich sollte der minimale Durchmesser des Außenprofils 3 des Anschlussstutzens kleiner sein als der maximale Innendurchmesser des Innenprofils des Wellrohrs, um ohne übermäßigen Kraftaufwand eine Verbindung zu ermöglichen. Der minimale Durchmesser des Innenprofils des Wellschlauchs sollte ein Maß zwischen dem minimalen und maximalen Durchmesser Außenprofils 3 des Anschlussstutzens 1 aufweisen.

Figur 2 zeigt eine Leitung 2 mit einer erfindungsgemäßen Muffe 4 zum Anschluss an einen wie in Figur 1 dargestellten Anschlussstutzen 1. An einem Ende der Leitung 2 ist die Muffe 4 derart angespritzt, dass in einem Übergangsbereich 5 sich Muffe 4 und Leitung 2 überlappen. Aus fertigungstechnischen Gründen ist es besonders vorteilhaft, wenn die Muffe 4 hierbei die Leitung 2 in diesem Übergangsbereich 5 umschließt, da dann die Leitung in einem Zweikomponentenspritzgußverfahren im zweiten Spritzgußschritt umschlossen werden kann. Verfügt die Leitung 2 in diesem Übergangsbereich über zumindest eine Welle, so ist die Verbindung zur Übertragung großer Zugspannungen besonders gut geeignet. Hierbei ist eine Materialkombination aus einem Thermoplast (zum Beispiel Polypropylen) für die Leitung 2 sowie aus einem thermoplastische Elastomer (vorzugsweise auf Olefinbasis) für die angespritzte Muffe 4 besonders zweckmäßig. Hierdurch lässt sich eine dichte, form- und kraftschlüssige Verbindung gewährleisten.

Verfügt die Muffe 4 über ein mit dem Außenprofil 3 des Anschlussstutzens 1 korrespondierendes ringförmiges, alternierendes Innenprofil 6, so wird eine Montage mit relativ geringem Kraftaufwand bei zugleich festem Sitz gewährleistet.

Verfügt die Muffe 4 über kein Innenprofil 6, so muss der Innendurchmesser der Muffe 4 kleiner sein als der maximale Durchmesser des Anschlussstücks1; zugleich sollte der Innendurchmesser der Muffe 4 größer sein als der minimale Durchmesser des Anschlussstücks1, um eine leichte Montage zu ermöglichen.

Verfügt die Muffe 4 über ein Innenprofil 6, so muss der maximale Durchmesser des Außenprofils 3 des Anschlussstutzens 1 größer sein als der maximale Innendurchmesser des Innenprofils 6 der Muffe 4. Zugleich sollte der minimale Durchmesser des Außenprofils 3 des Anschlussstutzens 1 kleiner sein als der maximale Innendurchmesser des Innenprofils der Muffe 4, um ohne übermäßigen Kraftaufwand eine Verbindung zu ermöglichen. Der minimale Durchmesser des Innenprofils 6 der Muffe 4 sollte ein Maß zwischen dem minimalen und maximalen Durchmesser Außenprofils 3 des Anschlussstutzens 1 aufweisen.

Figur 3 zeigt die Verbindung von dem Anschlussstutzens 1 mit der Muffe 4, welche mit der Leitung 2 verbunden ist. Wird die Muffe 4 über den Anschlussstutzen 1 geschoben, so weitet sich die Muffe 4 auf und das Innenprofil 6 der Muffe 4 verzahnt sich mit dem Außenprofil 3 des Anschlussstutzens 1. Dies gewährt einen festen und kondensatdichten Sitz. Durch entsprechenden Zug an der Leitung 2 kann die Verbindung wieder getrennt werden.

Die Innengeometrie des PTE-Muffe ist so gestaltet, dass die Steckverbindung abgas- und kondensatdicht ist. Die Halterkraft (Radialkraft) der Steckverbindung wird durch Spannung im elastischen Bereich erzeugt, wobei die ineinandergreifenden Rillen des Innen- 6 und Außenprofils 3 die Leitung 2 in Position hält.

Die erfindungsgemäße Verbindung des Anschlussstutzens 1 mit der Muffe 4 wird vorzugsweise in Brennwert-Heizungsgeräten eingesetzt. Hierbei strömt aus einem nicht dargestellten Primärwärmetauscher aus dem Verbrennungsabgas auskondensiertes Kondensat in den Anschlussstutzen 1 und von diesem in die Leitung 2, welche das Kondensat über einen nicht dargestellten Siphon aus dem Brennwert-Heizungsgeräten ableitet. Bei Druckstößen, welche zum Beispiel durch eine verspätete Zündung entstehen können, ist eine gas- und kondensatdichte Verbindung gewährleistet sowie ein Abrutschen der Leitung 2 wird verhindert.

## Patentansprüche

1. Steckverbindung mit Anschlussstutzen (1) und Leitung (2), wobei der Anschlussstutzen (1) ein im wesentlichen ringförmiges, alternierendes Außenprofil (3) aufweist, wobei mit der Leitung (2), welche aus einem Thermoplast hergestellt ist, eine im Zweikomponenten-Spritzgußverfahren angespritzte Muffe (4) aus einem thermoplastische Elastomer formschlüssig verbunden ist, **dadurch gekennzeichnet, dass** die Muffe (4) über ein mit dem im wesentlichen ringförmiges, alternierendes Außenprofil (3) des Anschlussstutzens (1) korrespondierendes im wesentlichen ringförmiges, alternierendes Innenprofil (6) verfügt.

2. Steckverbindung mit Anschlussstutzen (1) und Leitung (2) nach Anspruch 1, **dadurch gekennzeichnet, dass** das Thermoplast der Leitung (2) Polypropylen ist.

3. Steckverbindung mit Anschlussstutzen (1) und Leitung (2) nach Anspruch 1 oder 2, **dadurch gekennzeichnet, dass** die Muffe (4) aus einem thermoplastische Elastomer auf Olefinbasis besteht.

4. Steckverbindung mit Anschlussstutzen (1) und Leitung (2) nach einem der Ansprüche 1 bis 3, **dadurch gekennzeichnet, dass** sich die Muffe (4) sowie die Leitung (2) in axialer Erstreckungsrichtung der Leitung (2) in einem Übergangsbereich (5) überlappen.

5. Steckverbindung mit Anschlussstutzen (1) und Leitung (2) nach einem der Ansprüche 1 bis 4, **dadurch gekennzeichnet, dass** die Passung zwischen der Muffe (4) sowie dem Anschlussstutzen (1) eine Presspassung ist, welche durch die Elastizität der Muffe (4) eine formschlüssige Verbindung schafft.

## Claims

1. Plug type connection having a connection nozzle (1) and a line (2), wherein the connection nozzle (1) has a substantially annular alternating outer profile (3), wherein a sleeve (4) of a thermoplastic elastomer material which is injected with a dual-component injection-moulding method is connected in a positive-locking manner to the line (2) which is produced from a thermoplastic, **characterised in that** the sleeve (4) has a substantially annular alternating inner profile (6) which corresponds to the substantially annular alternating outer profile (3) of the connection nozzle (1).

2. Plug type connection having a connection nozzle (1) and line (2) according to claim 1, **characterised in that** the thermoplastic of the line (2) is polypropylene.

3. Plug type connection having a connection nozzle (1) and line (2) according to claim 1 or 2, **characterised in that** the sleeve (4) comprises a thermoplastic elastomer material based on olefin.

4. Plug type connection having a connection nozzle (1) and line (2) according to any one of claims 1 to 3, **characterised in that** the sleeve (4) and the line (2) overlap each other in an axial extent direction of the line (2) in a transition region (5).

5. Plug type connection having a connection nozzle (1) and line (2) according to any one of claims 1 to 4, **characterised in that** the fit between the sleeve (4) and the connection nozzle (1) is a press fit which as a result of the resilience of the sleeve (4) provides a positive-locking connection.

## Revendications

1. Raccord mâle et femelle avec embout de raccordement (1) et conduite (2), dans lequel l'embout de raccordement (1) présente un profil extérieur (3) sensiblement en forme d'anneau et alternant, dans lequel un manchon (4) en un élastomère thermoplastique et injecté avec le procédé de moulage par injection à deux composants est assemblé par concordance de forme avec la conduite (2) qui est fabriquée en un thermoplastique,
**caractérisé en ce que** le manchon (4) dispose d'un profil intérieur (6), sensiblement en forme d'anneau et alternant, qui correspond au profil extérieur (3), sensiblement en forme d'anneau et alternant, de l'embout de raccordement (1).

2. Raccord mâle et femelle avec embout de raccordement (1) et conduite (2) selon la revendication 1, **caractérisé en ce que** le thermoplastique de la conduite (2) est du polypropylène.

3. Raccord mâle et femelle avec embout de raccordement (1) et conduite (2) selon la revendication 1 ou 2, **caractérisé en ce que** le manchon (4) est en un élastomère thermoplastique à base d'oléfine.

4. Raccord mâle et femelle avec embout de raccordement (1) et conduite (2) selon l'une des revendications 1 à 3, **caractérisé en ce que** le manchon (4) ainsi que la conduite (2) se chevauchent dans la direction d'extension axiale de la conduite (2) dans une zone de transition (5).

5. Raccord mâle et femelle avec embout de raccordement (1) et conduite (2) selon l'une des revendications 1 à 4, **caractérisé en ce que** l'ajustage entre le manchon (4) et l'embout de raccordement (1) est un ajustage serré qui crée un assemblage par concordance ce forme grâce à l'élasticité du manchon (4).
